# FASCICULE DE BREVET EUROPEEN

(11) **EP 3 437 263 B1**
(45) Date de publication et mention de la délivrance du brevet: **09.12.2020**
(21) Numéro de dépôt: 17717783.9
(22) Date de dépôt: 24.03.2017
(51) Int. Cl.: H04W 4/14, H04L 12/58, H04W 4/12

(54) **PROCÉDÉ DE NOTIFICATION DE L'INDISPONIBILITÉ D'UN TERMINAL**
VERFAHREN ZUR BENACHRICHTIGUNG DER UNVERFÜGBARKEIT EINES ENDGERÄTS
METHOD OF NOTIFICATION OF THE UNAVAILABILITY OF A TERMINAL

(30) Priorité: 31.03.2016 FR 1652802
(43) Date de publication de la demande: 06.02.2019
(73) Titulaire: ORANGE, 75015 Paris (FR)
(72) Inventeur: BAILLY, Marc, 22560 Treubeurden (FR); LE ROUZIC, Jean-Claude, 22560 Trebeurden (FR)
(86) Numéro de dépôt international: PCT/FR2017/050692
(87) Numéro de publication internationale: WO 2017/168078

(56) Documents cités:
- FR-A1- 3 011 412
- US-A1- 2009 197 622
- US-A1- 2014 105 107

## Description

L'invention appartient au domaine des télécommunications et concerne en particulier le domaine de la messagerie instantanée.

### Technique antérieure

Les terminaux mobiles offrent à leurs utilisateurs la possibilité d'échanger des messages selon différentes modalités. Par exemple, ils peuvent envoyer et recevoir des SMS (Short Message Service) ou encore des MMS (Multimédia Messaging Service). Avec l'arrivée du haut débit mobile et le développement des architecture de type IMS, de nouvelles possibilités de communication sont apparues. Ainsi, les opérateurs de télécommunication ont défini un nouveau standard pour l'échange de messages, basé sur le protocole IP (Internet Protocol). Le standard RCS (Rich Communication Suite) est un service de communication qui améliore l'expérience de l'utilisateur en tirant partie de la connexion Internet haut débit disponible sur les terminaux modernes. En particulier, RCS permet d'échanger des messages entre différents types de terminaux utilisant différents types d'accès réseau (mobile, fixe, etc). RCS offre en outre des fonctions permettant de connaître l'état de réception d'un message par le destinataire, d'envoyer et recevoir des fichiers de tailles plus importantes qu'avec les MMS ou encore des fonctions d'envoi différé, appelées « Store & Forward », qui permettent de stocker temporairement un message dans le réseau lorsqu'il ne peut être délivré immédiatement au destinataire. Ces fonctions interviennent typiquement lorsque le terminal du destinataire n'est pas connecté ou en cas de perte de connectivité data du terminal receveur.

Les terminaux offrent donc deux technologies différentes pour l'acheminement des messages entre les utilisateurs. Les spécifications RCS ont prévu de privilégier l'utilisation de la connexion IP car elle est plus réactive et autorise des services plus évolués, mais la possibilité d'utiliser les protocoles de messagerie classiques (SMS, MMS) demeure lorsque le destinataire n'est pas joignable au travers de la connexion IP.

Dans le profil Européen de RCS (Joyn), le choix entre l'émission d'un message selon le protocole RCS ou le protocole SMS est fait selon les capacités des terminaux émetteurs et destinataires au moment où le message composé par l'utilisateur doit être émis. A titre d'exemple, si le terminal de l'émetteur identifie que le destinataire supporte le service RCS et qu'ils disposent tous deux d'une connectivité IP (internet Protocol), alors il choisira d'envoyer un message via RCS. En revanche s'il détecte que le terminal destinataire ne dispose pas d'une connectivité IP ou qu'il ne supporte pas le service RCS, le message sera émis via un SMS.

Lorsque les deux terminaux supportent le service RCS et qu'une connexion pour l'échange de message a été établie, un mécanisme d'acquittement des messages permet de savoir immédiatement si un message émis a bien été reçu et affiché sur le terminal du correspondant.

La fonction « Store & Forward » s'appuie généralement sur ce mécanisme d'acquittement pour savoir s'il faut ou non mémoriser un message. L'absence de réception d'un acquittement va en effet provoquer le stockage du message pour une tentative de re-livraison ultérieure.

C'est également sur cette absence de réception de l'acquittement que s'appuie le mécanisme de repli sur SMS du terminal émetteur. En effet, passé un certain délai après l'émission du message et en l'absence de réception de la notification de livraison du message du terminal destinataire, le terminal émetteur retransmet le message en SMS. Le délai d'attente avant retransmission via SMS est configurable par l'opérateur.

Ce mode de fonctionnement permet de garantir la distribution du message, mais il présente des inconvénients.

Un premier inconvénient est lié à la duplication des messages envoyés. En effet, lorsqu'un message est réémis sous forme d'un SMS via la connexion IP du terminal, le même message transite deux fois sur le réseau de l'opérateur, engendrant ainsi une charge supplémentaire pour ce réseau. D'autre part, dans certaines circonstances, le message peut être reçu en deux exemplaires par le destinataire (un exemplaire du message est reçu via RCS sur la connexion de données du terminal destinataire grâce à la fonction de «Store & Forward », l'autre exemplaire étant reçu par SMS).

Un autre inconvénient réside dans la latence qu'introduit une telle méthode de retransmission. En effet, le délai entre l'émission du message via RCS et sa réémission par SMS en cas d'échec du premier envoi est préjudiciable à l'interactivité. Lorsque ce délai est court, on augmente la duplication des messages alors que lorsque ce délai est long, l'interactivité de la conversation est dégradée.

Enfin la duplication des messages peut occasionner un déséquencement des messages reçus par le destinataire. En effet, celui-ci peut recevoir un ou plusieurs messages par SMS suite à une perte de sa connectivité IP, puis lorsque celle-ci est retrouvée, recevoir à nouveau tout ou partie de ces messages par RCS, grâce à la fonction « Store & Forward ». La cohérence du fil de discussion peut en être sérieusement affectée.

Les demandes de Brevet US2014105107 et FR3011412 fournissent des enseignements complémentaires sur le contexte de la présente demande.

Il existe donc un besoin pour une solution de retransmission de messages sur une connexion alternative qui ne présente pas les inconvénients précités de la technique antérieure.

### Résumé de l'invention

L'invention est définie par les revendications.

A cet effet, l'invention concerne un procédé de notification par un serveur d'application, d'une incapacité à délivrer un message émis par un premier terminal à destination d'un second terminal, le message étant transmis depuis le premier terminal vers le second terminal par l'intermédiaire du serveur d'application, le serveur d'application étant en outre configuré pour mémoriser au moins un message en vue d'une retransmission ultérieure lorsque le destinataire n'est pas joignable.

Le procédé est remarquable en ce qu'il comprend les étapes suivantes:
- obtention d'un message destiné au second terminal,
- détection du fait que le second terminal n'est pas joignable,
- détermination d'un identifiant de l'émetteur du message obtenu et de l'identifiant du message obtenu,
- transmission d'un message de notification vers l'émetteur du message, le message comportant au moins :
   - l'identifiant du message obtenu, et
   - une indication selon laquelle le message obtenu n'a pas été délivré.

Lorsqu'un serveur d'application reçoit des messages à destination d'un correspondant alors que celui-ci n'est pas joignable, les messages sont mémorisés dans une base de données du serveur par la fonction Store & Forward. Le procédé propose alors, lorsque l'injoignabilité du destinataire est détectée et que le message a été mémorisé, de rechercher un message mémorisé pour ce destinataire. Lorsqu'un message est obtenu, le procédé propose d'en déterminer l'émetteur ainsi qu'un identifiant du message. Ces informations permettent d'envoyer une notification à l'émetteur de façon à prévenir le terminal que des messages n'ont pas pu être délivrés et sont mémorisés dans l'attente que le destinataire soit de nouveau joignable. Ainsi, le procédé permet d'identifier les terminaux ayant émis des messages qui sont en attente de distribution de l'indisponibilité des destinataires respectifs de ces messages. De cette façon, les terminaux peuvent immédiatement prendre une décision de repli vers un autre mode de transmission du message, sans attendre l'expiration d'une temporisation.

Selon une réalisation particulière, le procédé comporte en outre, suite à la transmission du message de notification, une étape de réception d'un message comportant une commande d'annulation de l'envoi d'au moins un message mémorisé en vue d'une retransmission ultérieure.

Le procédé prévoit ainsi que l'envoi ultérieur de messages mémorisés par la fonction « Store & Forward » puisse être annulé. Par exemple, un terminal peut envoyer, suite à la retransmission d'un message par SMS, une commande de révocation d'un message mémorisé. Ainsi, le procédé permet d'éviter que les messages soient reçus en double exemplaires lorsque le terminal du destinataire sera de nouveau disponible.

Selon un mode particulier de réalisation, le procédé est tel que le message de notification comporte une indication relative à une pluralité de messages mémorisés destinés au second terminal.

Ainsi, un unique message de notification permet d'informer un émetteur lorsque plusieurs messages sont mémorisés en attendant de pouvoir être distribués.

Selon un mode de réalisation particulier, le message est transmis depuis le premier terminal vers le second terminal dans une session de transfert de données conforme à un premier protocole de communication, ladite session étant établie selon un second protocole de signalisation, le procédé étant tel que la notification est transmise dans un message conforme au second protocole de signalisation.

Le standard RCS prévoit que les échanges de messages sont réalisés dans une session établie conformément au protocole MSRP (Message Session Relay Protocol). Toujours selon le standard RCS, une telle session MSRP est établie à l'aide du protocole de signalisation SIP. Dans ces conditions, le procédé prévoit que la notification est émise dans un message conforme au protocole SIP. De cette façon, le terminal peut recevoir la notification même si la connexion MSRP n'est plus active, et prendre des dispositions quant à la retransmission du message par SMS. D'autre part, le fait d'utiliser une connexion SIP déjà établie permet d'éviter l'établissement d'une nouvelle connexion dédiée à l'envoi du message. Une telle disposition permet d'éviter une consommation de ressources inutile.

Selon une réalisation particulière, le message est transmis depuis le premier terminal vers le second terminal dans une session de transfert de données conforme à un premier protocole de communication, ladite session étant établie selon un second protocole de signalisation, le procédé étant tel que la notification est transmise dans un message conforme au premier protocole de transfert de données.

Le procédé prévoit que la notification est transmise selon le protocole MSRP en utilisant la session établie pour l'envoi des messages. Par cette disposition, le procédé permet d'optimiser le transport de la notification en utilisant une connexion déjà établie.

Selon une réalisation particulière, le procédé est tel que le premier protocole de communication est le protocole MSRP et que le second protocole de signalisation est le protocole SIP.

Ces dispositions rendent l'invention particulièrement adaptée à la retransmission de messages dans une communication selon le standard RCS.

Selon un autre aspect, l'invention concerne un dispositif de notification d'une incapacité à délivrer un message émis par un premier terminal à destination d'un second terminal, le message étant transmis depuis le premier terminal vers le second terminal par l'intermédiaire du dispositif, le dispositif de notification étant en outre configuré pour mémoriser au moins un message en vue d'une retransmission ultérieure lorsque le destinataire n'est pas joignable, le dispositif étant tel qu'il comporte les modules suivants :
- un module d'obtention d'un message destiné au second terminal,
- un module de détection du fait que le second terminal est injoignable:
- un module de détermination d'un identifiant de l'émetteur du message obtenu et de l'identifiant du message obtenu,
- un module de communication adapté pour transmettre un message de notification vers l'émetteur du message, le message comportant au moins :
   - l'identifiant du message obtenu, et
   - une indication selon laquelle le message obtenu n'a pas été délivré.

L'invention se rapporte encore à un serveur d'application comportant un dispositif de notification tel que décrit ci-dessus.

De façon correspondante, l'invention concerne aussi un procédé de retransmission sur un terminal, d'un message émis selon un premier mode de transmission adapté pour transmettre un message vers un destinataire par l'intermédiaire d'un réseau de communication comprenant un serveur d'application, le serveur d'application étant en outre configuré pour mémoriser au moins un message en vue d'une retransmission ultérieure lorsque le destinataire n'est pas joignable.

Le procédé est remarquable en ce qu'il comporte les étapes suivantes :
- Envoi d'un message vers le destinataire selon un premier mode de transmission,
- Réception d'un message de notification en provenance d'un serveur, le message comportant au moins:
   - un identifiant d'un message émis précédemment, et
   - une indication selon laquelle le message identifié n'a pas été délivré,
- Retransmission du message vers le destinataire selon un second mode de transmission.

Suite à l'envoi d'un message selon un premier mode de transmission, tel que par exemple selon le standard RCS, le terminal reçoit une notification comportant une indication qu'un message n'a pas été délivré car le correspondant n'était pas joignable. A la réception d'un tel message, le terminal peut prendre immédiatement la décision de retransmettre le message selon un mode de transmission alternatif, comme par exemple par SMS. De cette façon, contrairement aux techniques de l'art antérieur, le terminal n'a pas à attendre l'expiration d'un délai de retransmission préconfiguré. Cette disposition permet d'augmenter l'interactivité lorsque le destinataire de messages n'est plus disponible pour recevoir les messages selon le premier mode de transmission.

Selon un mode de réalisation particulier, le procédé de retransmission est tel qu'il comporte en outre une étape d'émission à destination du serveur, d'une commande d'annulation de l'envoi vers le second terminal d'au moins message identifié dans la notification reçue.

Lorsque le terminal prend la décision de retransmettre un message selon un autre mode de transmission, il peut en avertir le serveur d'application en lui commandant de ne pas transmettre les messages mémorisés lorsque le destinataire sera de nouveau joignable selon le standard RCS. Ainsi, le procédé permet d'éviter que le destinataire ne reçoive les messages en double et réduit le risque de déséquencement.

Selon un mode particulier de réalisation, le procédé de retransmission est tel que le second mode de transmission est un mode de transmission de type SMS.

La disponibilité du service SMS est supérieure à la disponibilité d'une connexion Internet sur un mobile. Ainsi, en proposant comme solution de repli un envoi de message par SMS le procédé permet d'assurer la remise du message en cas d'indisponibilité du destinataire.

Selon un autre aspect, l'invention concerne aussi un dispositif de retransmission d'un message émis selon un premier mode de transmission adapté pour transmettre un message vers un destinataire par l'intermédiaire d'un réseau de communication comprenant un serveur d'application, le serveur d'application étant en outre configuré pour mémoriser au moins un message en vue d'une retransmission ultérieure lorsque le destinataire n'est pas joignable, le dispositif étant tel qu'il comporte :
- Un module de communication adapté pour émettre un message vers le destinataire selon un premier mode de transmission,
- Un module de communication adapté pour recevoir un message de notification en provenance d'un serveur d'application, le message comportant au moins:
   - un identifiant d'un message émis précédemment, et
   - une indication selon laquelle le message identifié n'a pas été délivré,
- Un module de communication adapté pour retransmettre le message vers le destinataire selon un second mode de transmission.

L'invention se rapporte encore à un terminal comportant un dispositif de retransmission tel que décrit ci-dessus.

Les dispositifs, serveur et terminaux décrits précédemment présentent des avantages analogues à ceux des procédés auxquels ils se rapportent.

Dans un mode particulier de réalisation, les différentes étapes des procédés de notification et de retransmission sont déterminées par des instructions de programmes d'ordinateurs.

En conséquence, l'invention vise aussi un programme d'ordinateur comportant des instructions adaptées à la mise en œuvre des étapes des procédés tels que décrits ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un processeur sur lequel est enregistré un programme d'ordinateur comprenant des instructions pour l'exécution des étapes du procédé de notification et/ou des instructions pour l'exécution des étapes du procédé de retransmission.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de notification.

### Liste des figures

D'autres caractéristiques et avantages apparaîtront à la lecture de modes de réalisation préférés décrits en référence aux figures parmi lesquelles :
- La **figure 1** illustre une architecture adaptée pour mettre en œuvre le procédé selon un mode particulier de réalisation de l'invention,
- La **figure 2** illustre les principales étapes du procédé de retransmission selon une réalisation particulière,
- La **figure 3** illustre les principales étapes du procédé de notification selon un mode de réalisation particulier,
- La **figure 4** représente des échanges de messages entre différentes entités de l'architecture, selon une réalisation particulière,
- La **figure 5** représente une architecture d'un dispositif adapté pour mettre en œuvre le procédé de notification selon un mode de réalisation particulier de l'invention, et
- La **figure 6** représente une architecture d'un dispositif adapté pour mettre en œuvre le procédé de retransmission selon une réalisation particulière de l'invention.

### Description détaillée de l'invention

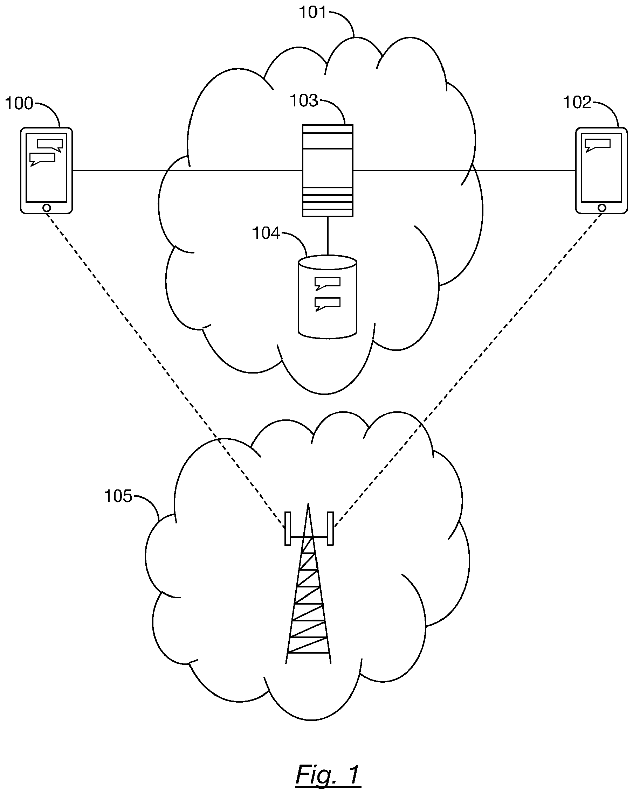

La **figure 1** représente un réseau de communication 101 comprenant un serveur d'application 103. Le réseau 101 est par exemple un réseau de type IMS (Internet Multimedia Subsystem) offrant des services de communication tels que par exemple un service de communication selon le standard RCS (Rich Communication Suite), mais l'invention peut trouver des applications dans d'autres types de réseau. Le réseau IMS 101 comprend un serveur d'application 103 mettant en œuvre un service de communication de type messagerie instantanée conforme au standard RCS.

Le serveur d'application 103 comprend un processeur, une mémoire telle que par exemple une mémoire RAM (Random Access Memory) et une interface de communication comme par exemple une interface réseau Ethernet. Le processeur est adapté pour exécuter les instructions d'un programme d'ordinateur chargé dans la mémoire. L'interface de communication permet au serveur d'application d'échanger des données avec d'autres équipements au travers du réseau de communication 101 selon différents protocoles. Par exemple, le serveur 103 est adapté pour échanger des messages conformes aux protocoles SIP (Session Initiation Protocol) et MSRP (Message Session Relay Protocol) utilisés dans le cadre de RCS (Rich Communication Suite) pour la messagerie instantanée. Le serveur 103 peut aussi mettre en œuvre tout autre protocole de messagerie instantanée. Un tel serveur d'application est capable de recevoir par exemple des messages instantanés envoyés depuis un terminal 100 et de retransmettre ces messages vers un destinataire 102.

Le serveur 103 comprend également une base de données 104. Cette base de données 104 peut être intégrée au serveur ou accessible via le réseau de communication. La base de données permet par exemple la mémorisation de messages instantanés en attente de distribution vers leurs destinataires et permet notamment la mise en œuvre d'un service de remise différée des messages de type « Store & Forward ». De manière connue, un tel service de remise différée permet le stockage temporaire des messages qui ne peuvent pas être remis immédiatement à leur destinataire final. Par exemple, si le terminal 102 n'est pas disponible, le serveur d'application 103 peut mémoriser dans la base de données 104 un message qui est destiné au terminal 102. Quand le terminal 102 est à nouveau disponible, les messages qui ont été mémorisés lui sont remis.

L'architecture de la **figure 1** montre également deux terminaux 100 et 102. Le terminal 100 est par exemple un terminal de communication mobile de type Smartphone. Un tel terminal comprend une unité de traitement dotée d'un processeur adapté pour exécuter des instructions d'un programme d'ordinateur chargé dans une mémoire du terminal. Le terminal 100 comprend également une interface de communication sans fil.

Le terminal 100 est adapté pour envoyer et recevoir des messages selon un premier mode de communication. Par exemple, le terminal peut émettre et recevoir des messages de type SMS ou MMS au travers d'une interface de connexion à un réseau de communication cellulaire 105 de type GSM, 2G, ou encore 3G.

Le terminal 100 est en outre adapté pour émettre et recevoir des messages selon un second mode de communication. Par exemple, le terminal 100 peut émettre et recevoir des messages au travers d'une connexion à un réseau IMS 101. Le terminal peut établir une connexion au réseau 101 par l'intermédiaire d'une interface de données cellulaire de type Edge, 3G ou 4G, comme par exemple le réseau 105, ou par l'intermédiaire d'une interface réseau sans fil de type Wifi, Bluetooth ou encore Wimax. Dans ce second mode de communication, les messages sont par exemple échangés selon la norme de téléphonie mobile RCS (Rich Communication Suite) qui met en œuvre les protocoles SIP (Session Initiation Protocol) et MSRP (Message Session Relay Protocol).

L'architecture comprend également un terminal 102 disposant de fonctionnalités sensiblement équivalentes à celles du terminal 100.

Ainsi, lorsque l'utilisateur du terminal 100 désire envoyer un message instantané au terminal 102, deux modes d'envoi sont possibles. Le message peut être envoyé sous la forme d'un SMS par l'intermédiaire du réseau cellulaire 105, ou bien sous la forme d'un message instantané par l'intermédiaire du réseau IMS 101. Le second mode de transmission, qui est ici conforme au standard RCS, est généralement privilégié car il offre une expérience utilisateur améliorée. Par exemple, l'utilisateur du terminal 100 bénéficie d'une information lui indiquant si le message à bien été délivré ou bien s'il a été lu par le destinataire. De plus, lorsque le terminal destinataire n'est pas joignable, le serveur 103 peut stocker temporairement le message afin de le distribuer à la prochaine connexion du terminal 102.

Afin de simplifier l'expérience utilisateur et améliorer l'ergonomie des services de messagerie, les opérateurs et constructeurs proposent des interfaces utilisateurs qui permettent de faire abstraction de la technologie utilisée pour transmettre le message. C'est donc le terminal qui décide, selon le contexte d'utilisation et des règles de service, si un message doit être émis via SMS ou via RCS.

Par exemple, de manière classique, lorsque le terminal 100 constate que le terminal destinataire 102 n'est pas conforme au standard RCS, le message est automatiquement envoyé par SMS. De même, lorsque des messages émis par le terminal 100 sont bien reçus par le terminal 102, ce dernier émet un accusé de réception au terminal 100. Ainsi, en l'absence d'accusé de réception après l'expiration d'une temporisation, le terminal 100 réémet le message par SMS.

Bien entendu, une telle architecture peut comprendre d'autres équipements qui ne sont pas représentés ici afin de faciliter la compréhension de l'invention. En particulier, l'architecture peut comprendre 2 réseaux IMS interconnectés et respectivement associés aux terminaux 100 et 102. Dans une telle configuration, chaque réseau IMS peut comprendre un serveur d'application 103 et une base de données 104.

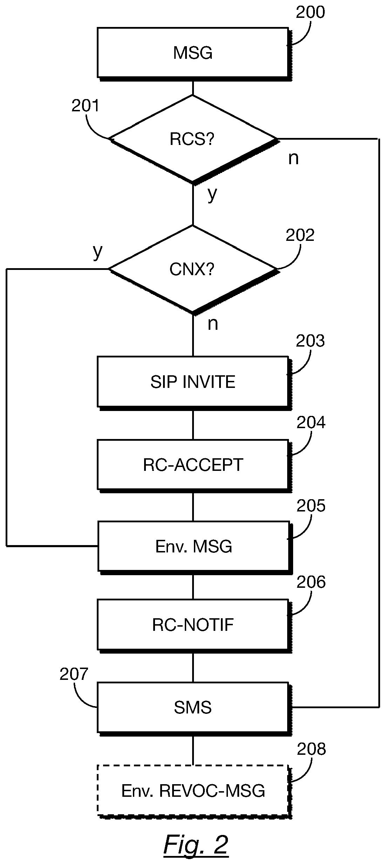

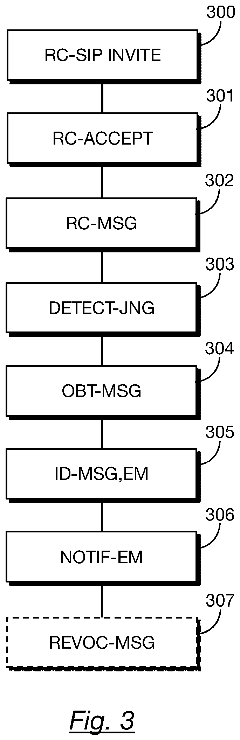

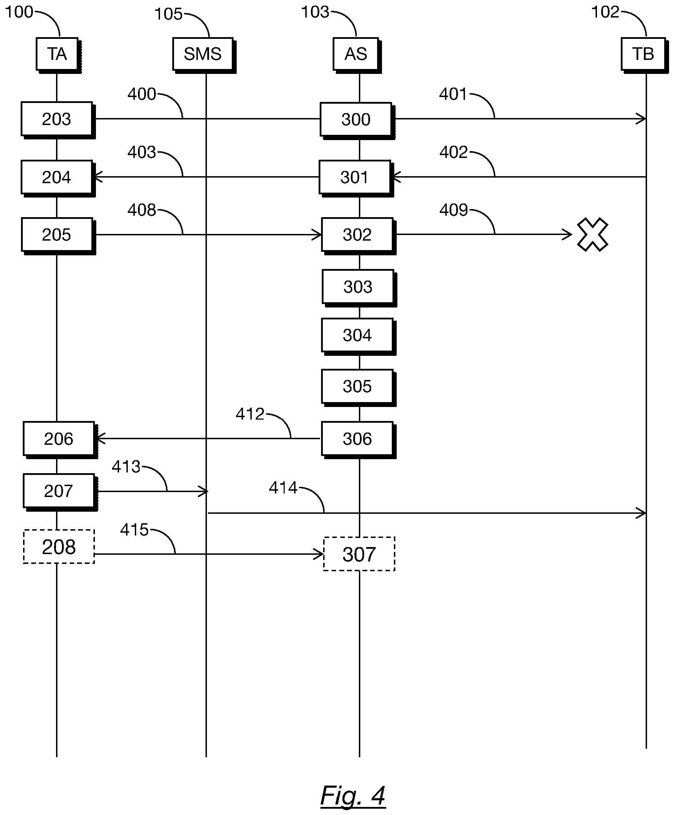

Un mode particulier de l'invention va maintenant être décrit en référence aux **figures 2****,** **3** **et** **4****.** La **figure 3** illustre les principales étapes du procédé de notification selon un mode particulier de réalisation. Les étapes du procédé de notification vont être décrites en référence à la **figure 4****.**

La **figure 2** illustre les principales étapes du procédé de retransmission. Ces étapes peuvent être exécutées par le terminal 100 lors de l'envoi d'un message instantané vers un destinataire. Un tel message instantané peut contenir différents éléments, comme par exemple du texte, une image, du son, une vidéo ou toute autre sorte de contenu numérique.

A l'étape 200, l'utilisateur du terminal compose un message instantané par l'intermédiaire d'une interface adaptée du terminal et confirme l'envoi en utilisant une commande d'une interface utilisateur prévu à cet effet. Par exemple, l'utilisateur compose un message textuel dans une zone de l'écran prévue à cet effet, sélectionne un destinataire dans une liste de contacts et valide l'envoi en touchant un bouton de validation sur une interface tactile du terminal.

Le terminal détermine alors, à l'étape 201, le mode d'envoi le plus adapté pour transmettre le message au destinataire en interrogeant par exemple le terminal destinataire pour connaître les différents modes de communication qu'il supporte. Selon un mode de réalisation particulier, le terminal 100 interroge un serveur du réseau IMS 101 afin de connaître les capacités de communication du terminal distant. Pour cela, le terminal 100 envoie par exemple une requête SIP OPTIONS et obtient en réponse les capacités de communications du terminal destinataire. Si le terminal destinataire n'est pas conforme au standard RCS, le message est transmis par SMS à l'étape 207. En revanche, si la réponse comporte une indication selon laquelle le terminal destinataire peut communiquer conformément au standard RCS, le terminal 100 examine à l'étape 202 si une connexion adaptée pour transmettre des messages vers le destinataire est disponible. Si une connexion est disponible, le terminal procède à l'envoi du message selon l'étape 205 du procédé de retransmission. Lorsqu'aucune connexion n'est disponible, une connexion doit être établie au préalable à l'envoi du message.

L'établissement d'une telle connexion comprend de manière classique une étape préalable d'enregistrement des terminaux sur un serveur d'enregistrement du réseau IMS. Un tel enregistrement est généralement effectué par l'envoi d'un message REGISTER conforme au protocole SIP. Un tel message comportant notamment un identifiant du terminal qui s'enregistre et une adresse de contact.

Lorsque les deux terminaux 100 et 102 sont correctement enregistrés, une session de messagerie instantanée conforme au standard RCS peut être établie. De manière connue, et en référence à la **figure 4**, l'établissement de la session peut être réalisé de la façon suivante :
- A l'étape 203, le terminal 100 émet un message SIP INVITE 400 à destination du correspondant. Ce message est reçu par le serveur d'application 103 à l'étape 300 puis retransmit au terminal 102 sous la forme d'un message 401.
- Suite à la réception de ce message, le terminal 102 transmet une réponse 402 dans laquelle il accepte l'établissement de la session. Cette réponse est reçue par le serveur d'application 103 à l'étape 301 puis retransmise au terminal 100 dans un message 403.
- Le terminal 100 peut acquitter la réception de la réponse 403 en envoyant un message ACK non représenté sur le chronogramme.

Cet échange de message initial permet de négocier un protocole d'échange de messages instantanés. A titre d'exemple, cet échange permet au terminal 100 de proposer l'utilisation du protocole MSRP pour échanger des messages. Dans sa réponse, le terminal 102 peut accepter l'utilisation du protocole MSRP proposé par le terminal 100. Bien évidemment, l'invention ne se limite pas au seul protocole MSRP et différents protocoles de signalisation tels que H.323 ou MGCP, ou d'autres protocoles d'échange de messages (Jabber/XMPP ou SIP/SIMPLE) peuvent être utilisés pour mettre en œuvre l'invention.

Ainsi, à l'étape 204, lorsque le terminal 100 reçoit la réponse du terminal 102, la session de messagerie instantanée est établie et les terminaux 100 et 102 peuvent échanger des messages au travers de cette connexion. Il existe donc une session de signalisation SIP et une connexion de transmission de données MSRP établies entre le terminal 100 et le terminal 102.

Les réseaux de communication tels que les réseaux IMS mettent en œuvre des services de communication par l'intermédiaire de serveurs d'applications. Classiquement, une communication établie dans un réseau IMS fait intervenir un ou plusieurs de ces serveurs d'applications qui peuvent, tel le serveur 103 des **figures 1** **et** **4**, être placés en coupure des messages échangés entre les terminaux 100 et 102. En l'espèce, le serveur 103 est placé en coupure des messages échangés entre le terminal 100 et le terminal 102 et fournit un service de distribution différée des messages lorsque le destinataire n'est pas joignable. Par exemple, lorsque le terminal 102 ne dispose pas de couverture réseau, ou qu'il n'est pas enregistré sur le réseau IMS, le serveur 103 peut stocker temporairement dans la base de données 104 les messages qui lui sont destinés afin de les lui remettre lorsqu'il sera à nouveau disponible. Pour cela, la connexion établie entre le terminal 100 et le terminal 102 peut correspondre à deux connexions : une première connexion entre le terminal 100 et le serveur 103, une autre connexion entre le serveur 103 et le terminal destinataire 102. Ainsi, lorsque le terminal 102 n'est plus disponible, les messages peuvent malgré tout être reçus par le serveur en vue d'une distribution différée.

A l'étape 205, un message instantané 408 composé par l'utilisateur est envoyé conformément au protocole MSRP négocié dans la session SIP établie aux étapes 203 et 204. Le message est reçu par le serveur 103 à l'étape 302 avant d'être retransmis vers le terminal 102. Lors de l'étape 302, le serveur 103 mémorise temporairement le message dans la base de données 104 afin de pouvoir réémettre ultérieurement ce message s'il ne peut être remis immédiatement. Pour cela, le serveur mémorise également un identifiant de l'émetteur du message, un identifiant du destinataire du message et un identifiant du message. La mémorisation de l'identifiant de l'émetteur du message et l'identifiant du message permettent au serveur 103 de notifier le terminal émetteur du succès ou de l'échec de remise du message. La mémorisation du message et d'un identifiant du destinataire permettent au serveur de tenter à nouveau la transmission du message vers le destinataire. Selon un mode de réalisation particulier, la mémorisation du message est réalisée uniquement lorsque le message n'a pas pu être délivré.

Dans cet exemple, le message 409 relayé par le serveur vers le destinataire ne peut pas être remis. Par exemple, le terminal 102 est devenu subitement injoignable car son utilisateur s'est déplacé dans une zone non couverte par le service et le message ne peut lui être remis.

Le serveur constate immédiatement que le message n'a pas pu être remis grâce à un mécanisme d'acquittement des messages prévu par le standard RCS. A l'étape 303, si aucune confirmation de la remise du message n'est reçue par le serveur, ou si la connexion MSRP n'est plus établie entre le serveur 103 et le terminal 102, le serveur 103, conformément au procédé de notification selon l'invention, obtient à l'étape 304, le message non remis qui était destiné au second terminal. Pour cela, il peut consulter la base de données dans laquelle sont temporairement mémorisés les messages non distribués et obtenir un enregistrement comportant les données mémorisées. A partir de cet enregistrement, le serveur détermine, à l'étape 305, un identifiant du message et un identifiant de l'émetteur de ce message de façon à pouvoir immédiatement informer le terminal 100 de la non distribution. A l'étape 306, le serveur envoie vers le terminal 100, émetteur du message, un message de notification 412 comportant au moins l'identifiant du message qui n'a pas pu être délivré, et une indication selon laquelle le message n'a pas été délivré. Bien entendu, le serveur 103 peut obtenir plusieurs messages non distribués et le message de notification envoyé au terminal 100 peut comprendre plusieurs identifiants de messages non délivrés.

Selon une réalisation particulière, le message de notification 412 est émis selon le protocole SIP. Par exemple, le message de notification consiste en un message de type SIP MESSAGE, SIP INFO ou SIP PUBLISH comportant une indication de non distribution du message. Le message instantané est ainsi transmis depuis le premier terminal 100 vers le second terminal 102 dans une session de transfert de données conforme au protocole MSRP, ladite session étant établie selon le protocole de signalisation SIP, la notification étant alors transmise dans un message conforme au protocole de signalisation SIP.

Selon une réalisation particulière, le message de notification 412 est émis selon le protocole MSRP. Le procédé profite qu'une session MSRP soit établie entre le terminal 100 et le serveur 103 pour transmettre un message de notification vers le terminal 100. Le message instantané est ainsi transmis depuis le premier terminal 100 vers le second terminal 102 dans une session de transfert de données conforme au protocole MSRP, ladite session étant établie selon le protocole de signalisation SIP, la notification étant alors transmise dans un message conforme au protocole MSRP.

Selon un mode particulier de réalisation, l'indication de non distribution du message présente dans le message de notification 412 peut correspondre à une indication de perte de connectivité dont la syntaxe s'appuie sur le standard CPIM définit par l'IETF dans la RFC 3862. Selon l'invention, la forme d'un tel message de notification de perte de connectivité est donnée en exemple à l'annexe 1. Dans cet exemple, l'invention utilise l'entête « NS » définie dans la RFC 3862 pour notifier un évènement de type « neworkEvent » qui concerne la perte de connectivité.

A la réception d'un tel message à l'étape 206, le terminal 100 retransmet le message vers le destinataire à l'étape 207 selon un second mode de transmission. Par exemple, le terminal peut retransmettre le message sous forme d'un SMS ou d'un MMS. Ainsi, contrairement à la technique antérieure, l'invention permet une plus grande réactivité lorsqu'un destinataire n'est plus disponible. En effet, alors que les techniques de l'art antérieur attendent l'expiration d'une temporisation avant de considérer qu'un message n'a pas été délivré, l'invention notifie immédiatement l'expéditeur que le destinataire n'est plus disponible.

Selon une réalisation particulière, le message de notification d'une perte de connectivité d'un terminal à une session de messagerie instantanée est émis vers un autre terminal lui aussi déconnecté de la session sans qu'aucun message n'ait été émis. Par exemple, si une connexion est établie entre les terminaux 100 et 102 et que l'un des terminaux perd sa connexion, un message de notification est envoyé à l'autre terminal de façon à ce que les prochains messages soient envoyés par SMS et non RCS. Dans ce cas, le message de notification ne fait référence à aucun message en particulier.

Selon une réalisation particulière, le serveur 103 profite de l'émission de l'événement réseau 412 décrit précédemment pour informer le terminal 100 du statut des messages non délivrés. Pour cela, le message comporte un identifiant d'au moins un message non délivré.

Le message peut comprendre un contenu conforme à la syntaxe CPIM, tel qu'illustré en exemple dans l'annexe 2. Dans ce message, on retrouve l'entête « NS » qui est utilisé ici pour définir un évènement réseau ayant un impact sur des messages échangés. Le corps du message comporte des informations au format XML concernant des messages qui n'ont pas pu être distribués à cause de l'événement réseau signalé dans l'entête « NS ». En particulier, le message comprend un champ « message-id » qui permet de désigner un message, un champ concernant le destinataire de ce message et le statut de remise du message. Dans cet exemple, le statut des messages signalés est « delivery-failed », ce qui indique un échec de la remise du message au destinataire. Comme on le voit dans cet exemple, un tel message de notification peut concerner plusieurs messages non remis.

La réception d'une telle notification à l'étape 206 par le terminal 100 lui permet à la fois de savoir que le terminal distant n'est plus joignable mais également que les messages identifiés dans le message de notification n'ont pas pu être livrés au destinataire.

En conséquence, à l'étape 207 le terminal 100 transmet le ou les messages non délivrés en utilisant un autre canal de communication, par exemple par SMS ou MMS. Pour cela, le terminal 100 émet un message 413 via l'interface GSM du terminal, le message est relayé par le réseau GSM avant d'être délivré au terminal 102 sous la forme d'un SMS 414.

Selon un mode particulier de réalisation, le terminal 100 peut émettre à l'étape 208 une commande 415 de révocation des messages mémorisés temporairement par le serveur 103. Cette commande peut comprendre par exemple des identifiants de messages devant être supprimé de la base de données 104. Cette disposition permet avantageusement d'éviter que les messages mémorisés par le serveur 103 ne soient remis au terminal 102 lorsqu'il sera de nouveau joignable. De cette façon, il n'existe plus de duplication de message lorsque le qu'un message RCS non délivré et mémorisé temporairement est réémis par le serveur d'application alors que ce même message a été retransmit par SMS suite à l'expiration d'une temporisation sur le terminal émetteur

A l'étape 307, le serveur reçoit le message 415 procède à l'annulation de l'envoi d'au moins un message mémorisé dans la base de données 104 en vue d'une retransmission ultérieure. Pour cela, le serveur supprime par exemple de la base de données 104 les entrées qui correspondent au message identifié dans le message 415.

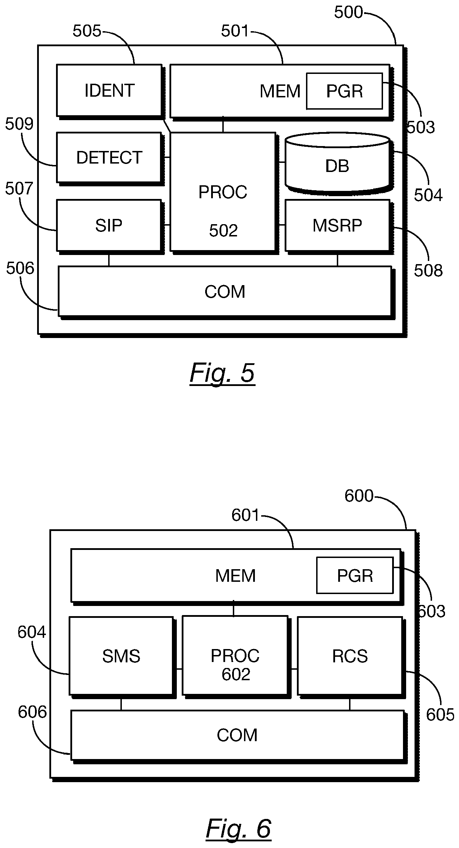

La **figure 5** illustre l'architecture d'un dispositif 500 adapté pour mettre en œuvre le procédé de notification selon un mode particulier de réalisation de l'invention.

Le dispositif 500 comprend un module de traitement de données comprenant un espace de stockage 501, par exemple une mémoire (MEM), une unité de traitement 502, équipée par exemple d'un microprocesseur (PROC), et pilotée par le programme d'ordinateur (PGR) 503 mettant en œuvre le procédé de notification tel que décrit dans l'invention en relation avec les **figures 3** **et** **4****.**

A l'initialisation, les instructions de code du programme d'ordinateur 503 sont par exemple chargées en mémoire avant d'être exécutées par le processeur de l'unité de traitement 502. Le microprocesseur de l'unité de traitement 502 met en œuvre, selon les instructions du programme d'ordinateur 503, les étapes du procédé de notification par un serveur d'application, d'une incapacité à délivrer un message, et notamment les étapes de :
- obtention d'un message destiné au second terminal,
- détection du fait que le second terminal n'est pas joignable,
- détermination d'un identifiant de l'émetteur du message obtenu et de l'identifiant du message obtenu,
- transmission vers l'émetteur du message, d'un message de notification comportant au moins :
   ∘ l'identifiant du message obtenu, et
   ∘ une indication selon laquelle le message obtenu n'a pas été délivré.

Selon un mode de réalisation particulier, le dispositif comprend des moyens 509 de détection du fait que le second terminal est injoignable. De tels moyens peuvent comprendre un microprocesseur, comme par exemple le processeur 502, une mémoire telle que la mémoire 501 et un programme d'ordinateur comprenant des instructions adaptées pour surveiller et détecter la perte de connexion d'un terminal. Par exemple, le programme peut comprendre des instructions pour émettre régulièrement un message vers le terminal 102 et déterminer que le terminal surveillé n'est pas disponible lorsqu'il ne reçoit pas de réponse. Un tel programme d'ordinateur peut également comprendre des instructions pour interroger un serveur d'enregistrement du réseau afin de connaître la disponibilité du terminal surveillé.

Le dispositif 500 comprend également des moyens 504 d'obtention d'un message destiné à un terminal. Il peut s'agir par exemple d'une base de données relationnelle, telle que la base de données 104, acceptant des commandes de stockage et d'obtention de données, comme par exemple des commandes SQL. Les moyens d'obtention d'un message peuvent aussi comprendre un microprocesseur, comme par exemple le processeur 502, une mémoire telle que la mémoire 501, et un programme d'ordinateur chargé dans cette mémoire comprenant des instructions adaptées pour formuler une requête SQL adaptée pour obtenir un ou plusieurs messages mémorisés ayant pour destinataire un terminal particulier et/ou pour identifiant un identifiant de message particulier. Le dispositif peut ainsi obtenir tous les messages qui n'ont pas pu être délivré à un terminal qui a été détecté comme étant non joignable.

Le dispositif comprend aussi des moyens de détermination 505 d'un identifiant de l'émetteur du message obtenu et de l'identifiant du message obtenu. Ces moyens peuvent comprendre un microprocesseur, comme par exemple le processeur 502, une mémoire telle que la mémoire 501, et un programme d'ordinateur chargé dans cette mémoire comprenant des instructions adaptées pour déterminer un identifiant de l'expéditeur d'un message, comme par exemple un numéro de téléphone ou une URL, ainsi qu'un identifiant du message qui a été obtenu par les moyens d'obtention 504 après avoir été stocké temporairement faute d'avoir pu être délivré. Le dispositif peut ainsi générer un message de notification comprenant des identifiants de messages qui n'ont pas pu être délivrés, et délivrer ce message de notification en utilisant l'identifiant de l'émetteur déterminé.

Le dispositif comprend en outre des moyens de communication 506 adaptés pour transmettre vers l'émetteur du message, un message de notification comportant au moins l'identifiant du message obtenu, et une indication selon laquelle le message obtenu n'a pas été délivré. Selon un mode de réalisation particulier, le message de notification comporte une indication selon laquelle le terminal du destinataire n'est pas joignable. Ces moyens de communication sont par exemple mis en œuvre par une interface de communication telle qu'une interface réseau Ethernet par exemple. Ces moyens de communication peuvent comprendre un microprocesseur, comme par exemple le processeur 502, une mémoire telle que la mémoire 501, et un programme d'ordinateur chargé dans cette mémoire comprenant des instructions adaptées pour générer et envoyer un message de notification selon un protocole particulier. Le dispositif comprend des piles protocolaires adaptées, comme par exemple des piles protocolaires SIP 507 et MSRP 508, de façon à pouvoir générer et échanger des messages conformes au standard RCS.

Selon un mode particulier de réalisation, le dispositif 500 est compris dans un serveur, un serveur d'application, un serveur d'application d'un réseau IMS.

La **figure 6** illustre l'architecture d'un dispositif 600 adapté pour mettre en œuvre le procédé de retransmission selon un mode particulier de réalisation de l'invention.

Le dispositif 600 comprend un module de traitement de données comprenant un espace de stockage 601, par exemple une mémoire (MEM), une unité de traitement 602, équipée par exemple d'un microprocesseur (PROC), et pilotée par le programme d'ordinateur (PGR) 603 mettant en œuvre le procédé de retransmission tel que décrit dans l'invention en relation avec la **figure 2****.**

A l'initialisation, les instructions de code du programme d'ordinateur 603 sont par exemple chargées en mémoire avant d'être exécutées par le processeur de l'unité de traitement 602. Le microprocesseur de l'unité de traitement 602 met en œuvre, selon les instructions du programme d'ordinateur 603, les étapes du procédé de retransmission, et notamment les étapes de :
- Envoi d'un message vers le destinataire selon un premier mode de transmission,
- Réception, en provenance d'un serveur, d'un message de notification comportant au moins:
   - un identifiant d'un message émis précédemment, et
   - une indication selon laquelle le message identifié n'a pas été délivré,
- Retransmission du message vers le destinataire selon un second mode de transmission.

Le dispositif comprend en outre des moyens de communication 606 (COM). Les moyens de communications comprennent une interface réseau sans fil comme par exemple une interface Wifi et une interface adaptée pour se connecter à un réseau cellulaire, comme par exemple une interface GSM, 3G ou 4G. Les moyens de communication 606 permettent notamment d'envoyer des messages par SMS ou par RCS, de recevoir des messages de notification comportant au moins un identifiant d'un message émis précédemment, et une indication selon laquelle le message identifié n'a pas été délivré. Les moyens de communications permettent également d'émettre des commandes de révocation de messages mémorisés temporairement par le serveur 103.

Pour cela, les moyens de communication coopèrent avec des modules protocolaires 604 (SMS) et 605 (RCS) qui permettent l'émission de messages conformément aux standards SMS et RCS.

Le dispositif 600 est intégré à un terminal mobile de communication, un terminal de type smartphone, à une tablette ou à un ordinateur personnel.

### ANNEXES

### Annexe 1 :

```
 From : Bob <im :bob@example.com>
 To: Alice <im:alice@example.com>
 NS: networkEvent <urn:ietf:params:networkEvent>
 networkEvent.Event-Type: connectivity lost
 Content-length: 0
```

### Annexe 2:

```
 From: Bob <im:bob@example.com>
 To: Alice <im:alice@example.com>
 NS: networkEventandImdn <urn:ietf:params:networkEventandImdn>
 networkEventandImdn.Event-Type: connectivity lost
 Content-type: message/imdn+xml
 Content-Disposition: notification
 Content-length: ...
 <?xml version="1.0" encoding-"UTF-8"?>
       <networkEventandImdn xmlns="urn:ietf:params:xml:ns: networkEventandImdn">
         <message-id>34jk324j</message-id>
         <datetime>2008-04-04T12:16:49-05:00</datetime>
         <recipient-uri>im:bob@example.com</recipient-uri>
         <original-recipient-uri>im:bob@example.com</original-recipient-uri>
         <delivery-notification>
             <status>
                  <deliver-failed/>
             </status>
         </delivery-notification>
         <message-id>424dgfjr256</message-id>
         <datetime>2008-04-04T12:17:02-05:00</datetime>
         <recipient-uri>im:bob@example.com</recipient-uri>
         <original-recipient-uri>im:bob@example.com</original-recipient-uri>
         <delivery-notification>
             <status>
                  <deliver-failed/>
             </status>
         </delivery-notification>
 </ networkEventandImdn >
```

## Revendications

1. Procédé de notification par un serveur d'application, d'une incapacité à délivrer un message émis par un premier terminal à destination d'un second terminal, le message étant transmis depuis le premier terminal vers le second terminal dans une session de transfert de données conforme à un premier protocole de communication, ladite session étant établie selon un second protocole de signalisation et par l'intermédiaire d'un réseau de communication comprenant le serveur d'application, le serveur d'application étant en outre configuré pour mémoriser au moins le message en vue d'une retransmission ultérieure lorsque le destinataire n'est pas joignable, le procédé étant **caractérisé en ce qu'**il comprend les étapes suivantes :
- Obtention (302, 304) du message destiné au second terminal,
- Détection (303) du fait que le second terminal n'est pas joignable,
- détermination (305) d'un identifiant de l'émetteur du message obtenu et de l'identifiant du message obtenu,
- transmission (306) vers l'émetteur du message, dans un message conforme au second protocole de signalisation, d'un message de notification comportant au moins :
∘ l'identifiant du message obtenu, et
∘ une indication selon laquelle le message obtenu n'a pas été délivré.

2. Procédé selon la revendication 1 **caractérisé en ce qu'**il comporte en outre, suite à la transmission du message de notification, une étape de réception d'un message comportant une commande d'annulation de l'envoi d'au moins un message obtenu et mémorisé en vue d'une retransmission ultérieure.

3. Procédé selon l'une quelconque des revendications précédentes **caractérisé en ce que** le message de notification comporte une indication relative à une pluralité de messages mémorisés destinés au second terminal.

4. Procédé selon l'une quelconque des revendications précédentes **caractérisé en ce que** le premier protocole de communication est le protocole MSRP et que le second protocole de signalisation est le protocole SIP.

5. Dispositif de notification d'une incapacité à délivrer un message émis par un premier terminal à destination d'un second terminal, le message étant transmis depuis le premier terminal vers le second terminal par l'intermédiaire du dispositif dans une session de transfert de données conforme à un premier protocole de communication, ladite session étant établie selon un second protocole de signalisation, le dispositif étant en outre configuré pour mémoriser au moins le message en vue d'une retransmission ultérieure lorsque le destinataire n'est pas joignable, le dispositif étant **caractérisé en ce qu'**il comporte les modules suivants :
- un module (504) d'obtention du message destiné au second terminal,
- un module (509) de détection du fait que le second terminal est injoignable,
- un module (505) de détermination d'un identifiant de l'émetteur du message obtenu et de l'identifiant du message obtenu,
- un module (506) de communication adapté pour transmettre vers l'émetteur du message, dans un message conforme au second protocole de signalisation, un message de notification comportant au moins :
∘ l'identifiant du message obtenu, et
∘ une indication selon laquelle le message obtenu n'a pas été délivré.

6. Serveur d'application **caractérisé en ce qu'**il comporte un dispositif selon la revendication 5.

7. Procédé de retransmission sur un terminal, d'un message émis selon un premier mode de transmission adapté pour transmettre un message vers un destinataire dans une session de transfert de données conforme à un premier protocole de communication, ladite session étant établie selon un second protocole de signalisation et par l'intermédiaire d'un réseau de communication comprenant un serveur d'application, le serveur d'application étant en outre configuré pour mémoriser au moins le message en vue d'une retransmission ultérieure lorsque le destinataire n'est pas joignable, le procédé étant **caractérisé en ce qu'**il comporte les étapes suivantes :
- Envoi (205) du message vers le destinataire selon un premier mode de transmission,
- réception (206), en provenance d'un serveur, dans un message conforme au second protocole de signalisation, d'un message de notification comportant au moins:
∘ un identifiant d'un message émis précédemment, et
∘ une indication selon laquelle le message identifié n'a pas été délivré,
- Retransmission (207) du message vers le destinataire selon un second mode de transmission.

8. Procédé selon la revendication 7 **caractérisé en ce qu'**il comporte en outre une étape d'émission à destination du serveur, d'une commande d'annulation de l'envoi vers le second terminal d'au moins message identifié dans la notification reçue.

9. Procédé selon la revendication 8 **caractérisé en ce que** le second mode de transmission est un mode de transmission de type SMS.

10. Dispositif de retransmission d'un message émis selon un premier mode de transmission adapté pour transmettre un message vers un destinataire dans une session de transfert de données conforme à un premier protocole de communication, ladite session étant établie selon un second protocole de signalisation et par l'intermédiaire d'un réseau de communication comprenant un serveur d'application, le serveur d'application étant en outre configuré pour mémoriser au moins le message en vue d'une retransmission ultérieure lorsque le destinataire n'est pas joignable, le dispositif étant **caractérisé en ce qu'**il comporte :
- Un module (606) de communication adapté pour émettre le message vers le destinataire selon un premier mode de transmission (605),
- Un module de communication adapté pour recevoir, en provenance d'un serveur d'application, dans un message conforme au second protocole de signalisation, un message de notification comportant au moins:
∘ un identifiant d'un message émis précédemment, et
∘ une indication selon laquelle le message identifié n'a pas été délivré,
- Un module de communication adapté pour retransmettre le message vers le destinataire selon un second mode de transmission (604).

11. Terminal de communication comprenant un dispositif de retransmission selon la revendication 10.

12. Support d'enregistrement lisible par un ordinateur sur lequel est enregistré un programme d'ordinateur comprenant des instructions pour l'exécution des étapes du procédé de notification selon l'une quelconque des revendications 1 à 4 lorsque le programme d'ordinateur est exécuté par un processeur d'un serveur d'application ou des instructions pour l'exécution des étapes du procédé de retransmission selon l'une quelconque des revendications 7 à 9 lorsque le programme d'ordinateur est exécuté par un processeur d'un terminal.

## Patentansprüche

1. Verfahren zur Mitteilung, durch einen Anwendungsserver, einer Unfähigkeit, eine von einem ersten Endgerät an ein zweites Endgerät gesendete Nachricht zuzustellen, wobei die Nachricht vom ersten Endgerät an das zweite Endgerät in einer Datentransfersitzung gemäß einem ersten Kommunikationsprotokoll übertragen wird, wobei die Sitzung gemäß einem zweiten Signalisierungsprotokoll und mittels eines den Anwendungsserver enthaltenden Kommunikationsnetzwerks aufgebaut wird, wobei der Anwendungsserver außerdem konfiguriert ist, mindestens die Nachricht für eine spätere erneute Übertragung zu speichern, wenn der Empfänger nicht erreichbar ist, wobei das Verfahren **dadurch gekennzeichnet ist, dass** es die folgenden Schritte enthält:
- Erhalt (302, 304) der für das zweite Endgerät bestimmten Nachricht,
- Erfassung (303) der Tatsache, dass das zweite Endgerät nicht erreichbar ist,
- Bestimmung (305) einer Kennung des Senders der erhaltenen Nachricht und der Kennung der erhaltenen Nachricht,
- Übertragung (306) an den Sender der Nachricht, in einer Nachricht gemäß dem zweiten Signalisierungsprotokoll, einer Mitteilungsnachricht, die mindestens aufweist:
∘ die Kennung der erhaltenen Nachricht, und
∘ eine Angabe, gemäß der die erhaltene Nachricht nicht zugestellt wurde.

2. Verfahren nach Anspruch 1, **dadurch gekennzeichnet, dass** es außerdem nach der Übertragung der Mitteilungsnachricht einen Schritt des Empfangs einer Nachricht aufweist, die einen Annullierungsbefehl des Versendens mindestens einer erhaltenen und für eine spätere erneute Übertragung gespeicherten Nachricht aufweist.

3. Verfahren nach einem der vorhergehenden Ansprüche, **dadurch gekennzeichnet, dass** die Mitteilungsnachricht eine Angabe bezüglich einer Vielzahl von gespeicherten Nachrichten aufweist, die für das zweite Endgerät bestimmt sind.

4. Verfahren nach einem der vorhergehenden Ansprüche, **dadurch gekennzeichnet, dass** das erste Kommunikationsprotokoll das MSRP-Protokoll und das zweite Signalisierungsprotokoll das SIP-Protokoll ist.

5. Vorrichtung zur Mitteilung einer Unfähigkeit, eine von einem ersten Endgerät an ein zweites Endgerät gesendete Nachricht zuzustellen, wobei die Nachricht vom ersten Endgerät an das zweite Endgerät mittels der Vorrichtung in einer Datentransfersitzung gemäß einem ersten Kommunikationsprotokoll übertragen wird, wobei die Sitzung gemäß einem zweiten Signalisierungsprotokoll aufgebaut wird, wobei die Vorrichtung außerdem konfiguriert ist, mindestens die Nachricht für eine spätere erneute Übertragung zu speichern, wenn der Empfänger nicht erreichbar ist, wobei die Vorrichtung **dadurch gekennzeichnet ist, dass** sie die folgenden Module aufweist:
- ein Modul (504) zum Erhalt der für das zweite Endgerät bestimmten Nachricht,
- ein Modul (509) zur Erfassung der Tatsache, dass das zweite Endgerät nicht erreichbar ist,
- ein Modul (505) zur Bestimmung einer Kennung des Senders der erhaltenen Nachricht und der Kennung der erhaltenen Nachricht,
- ein Kommunikationsmodul (506), das geeignet ist, an den Sender der Nachricht in einer Nachricht gemäß dem zweiten Signalisierungsprotokoll eine Mitteilungsnachricht zu übertragen, die mindestens aufweist:
∘ die Kennung der erhaltenen Nachricht, und
∘ eine Angabe, gemäß der die erhaltene Nachricht nicht zugestellt wurde.

6. Anwendungsserver, **dadurch gekennzeichnet, dass** er eine Vorrichtung nach Anspruch 5 aufweist.

7. Verfahren zur erneuten Übertragung an ein Endgerät einer gemäß einem ersten Übertragungsmodus gesendeten Nachricht, das geeignet ist, eine Nachricht an einen Empfänger in einer Datentransfersitzung gemäß einem ersten Kommunikationsprotokoll zu übertragen, wobei die Sitzung gemäß einem zweiten Signalisierungsprotokoll und mittels eines einen Anwendungsserver enthaltenden Kommunikationsnetzwerks aufgebaut wird, wobei der Anwendungsserver außerdem konfiguriert ist, mindestens die Nachricht für eine spätere erneute Übertragung zu speichern, wenn der Empfänger nicht erreichbar ist, wobei das Verfahren **dadurch gekennzeichnet ist, dass** es die folgenden Schritte aufweist:
- Versenden (205) der Nachricht an den Empfänger gemäß einem ersten Übertragungsmodus,
- Empfang (206), von einem Server kommend, in einer Nachricht gemäß dem zweiten Signalisierungsprotokoll, einer Mitteilungsnachricht, die mindestens aufweist:
∘ eine Kennung einer vorher gesendeten Nachricht, und
∘ eine Angabe, gemäß der die erkannte Nachricht nicht zugestellt wurde,
- erneute Übertragung (207) der Nachricht an den Empfänger gemäß einem zweiten Übertragungsmodus.

8. Verfahren nach Anspruch 7, **dadurch gekennzeichnet, dass** es außerdem einen Schritt des Sendens an den Server eines Annullierungsbefehls des Versendens an das zweite Endgerät mindestens einer in der empfangenen Mitteilung erkannten Nachricht aufweist.

9. Verfahren nach Anspruch 8, **dadurch gekennzeichnet, dass** der zweite Übertragungsmodus ein Übertragungsmodus der Art SMS ist.

10. Vorrichtung zur erneuten Übertragung einer gemäß einem ersten Übertragungsmodus gesendeten Nachricht, die geeignet ist, eine Nachricht an einen Empfänger in einer Datentransfersitzung gemäß einem ersten Kommunikationsprotokoll zu übertragen, wobei die Sitzung gemäß einem zweiten Signalisierungsprotokoll und mittels eines einen Anwendungsserver enthaltenden Kommunikationsnetzwerks aufgebaut wird, wobei der Anwendungsserver außerdem konfiguriert ist, mindestens die Nachricht für eine spätere erneute Übertragung zu speichern, wenn der Empfänger nicht erreichbar ist, wobei die Vorrichtung **dadurch gekennzeichnet ist, dass** sie aufweist:
- ein Kommunikationsmodul (606), das geeignet ist, die Nachricht gemäß einem ersten Übertragungsmodus (605) an den Empfänger zu senden,
- ein Kommunikationsmodul, das geeignet ist, von einem Anwendungsserver kommend in einer Nachricht gemäß dem zweiten Signalisierungsprotokoll eine Mitteilungsnachricht zu empfangen, die mindestens aufweist:
∘ eine Kennung einer vorher gesendeten Nachricht, und
∘ eine Angabe, gemäß der die erkannte Nachricht nicht zugestellt wurde,
- ein Kommunikationsmodul, das geeignet ist, die Nachricht gemäß einem zweiten Übertragungsmodus (604) erneut an den Empfänger zu übertragen.

11. Kommunikationsendgerät, das eine Vorrichtung zur erneuten Übertragung nach Anspruch 10 enthält.

12. Computerlesbarer Aufzeichnungsträger, auf dem ein Computerprogramm aufgezeichnet ist, das Anweisungen zur Ausführung der Schritte des Mitteilungsverfahrens nach einem der Ansprüche 1 bis 4, wenn das Computerprogramm von einem Prozessor eines Anwendungsservers ausgeführt wird, oder Anweisungen zur Ausführung der Schritte des Verfahrens der erneuten Übertragung nach einem der Ansprüche 7 bis 9 enthält, wenn das Computerprogramm von einem Prozessor eines Endgeräts ausgeführt wird.

## Claims

1. Method of notification by an application server, of an inability to deliver a message sent by a first terminal destined for a second terminal, the message being transmitted from the first terminal to the second terminal in a data transfer session in compliance with a first communication protocol, said session being established according to a second signalling protocol and by way of a communication network comprising the application server, the application server being further configured to store at least the message with a view to a later retransmission when the recipient is not reachable, the method being **characterized in that** it comprises the following steps:
- obtaining (302, 304) the message intended for the second terminal,
- detecting (303) the fact that the second terminal is not reachable,
- determining (305) an identifier of the sender of the message obtained and the identifier of the message obtained,
- transmitting (306) to the sender of the message, in a message in compliance with the second communication protocol, a notification message comprising at least:
∘ the identifier of the message obtained, and
∘ an indication according to which the message obtained has not been delivered.

2. Method according to Claim 1, **characterized in that** it further comprises, subsequent to the transmission of the notification message, a step of receiving a message comprising a command for cancelling the sending of at least one message obtained and stored with a view to a later retransmission.

3. Method according to either of the preceding claims, **characterized in that** the notification message comprises an indication relating to a plurality of stored messages which are intended for the second terminal.

4. Method according to any one of the preceding claims, **characterized in that** the first communication protocol is the MSRP protocol and that the second signalling protocol is the SIP protocol.

5. Device for notifying an inability to deliver a message sent by a first terminal destined for a second terminal, the message being transmitted from the first terminal to the second terminal by way of the device in a data transfer session in compliance with a first communication protocol, said session being established according to a second signalling protocol, the device being further configured to store at least the message with a view to a later retransmission when the recipient is not reachable, the device being **characterized in that** it comprises the following modules:
- a module (504) for obtaining the message intended for the second terminal,
- a module (509) for detecting the fact that the second terminal is unreachable,
- a module (505) for determining an identifier of the sender of the message obtained and the identifier of the message obtained,
- a communication module (506) suitable for transmitting to the sender of the message, in a message in compliance with the second communication protocol, a notification message comprising at least:
∘ the identifier of the message obtained, and
∘ an indication according to which the message obtained has not been delivered.

6. Application server, **characterized in that** it comprises a device according to Claim 5.

7. Method of retransmission on a terminal, of a message sent according to a first transmission mode suitable for transmitting a message to a recipient in a data transfer session in compliance with a first communication protocol, said session being established according to a second signalling protocol and by way of a communication network comprising an application server, the application server being further configured to store at least the message with a view to a later retransmission when the recipient is not reachable, the method being **characterized in that** it comprises the following steps:
- sending (205) the message to the recipient according to a first transmission mode,
- receiving (206), from a server, in a message in compliance with the second communication protocol, a notification message comprising at least:
∘ an identifier of a message sent previously, and
∘ an indication according to which the identified message has not been delivered,
- retransmitting (207) the message to the recipient according to a second transmission mode.

8. Method according to Claim 7, **characterized in that** it further comprises a step of sending the server a command for cancelling the sending to the second terminal of at least one message identified in the notification received.

9. Method according to Claim 8, **characterized in that** the second transmission mode is a transmission mode of SMS type.

10. Device for retransmitting a message sent according to a first transmission mode suitable for transmitting a message to a recipient in a data transfer session in compliance with a first communication protocol, said session being established according to a second signalling protocol and by way of a communication network comprising an application server, the application server being further configured to store at least the message with a view to a later retransmission when the recipient is not reachable, the device being **characterized in that** it comprises:
- a communication module (606) suitable for sending the message to the recipient according to a first transmission mode (605),
- a communication module suitable for receiving, from an application server, in a message in compliance with the second communication protocol, a notification message comprising at least:
∘ an identifier of a message sent previously, and
∘ an indication according to which the identified message has not been delivered,
- a communication module suitable for retransmitting the message to the recipient according to a second transmission mode (604).

11. Communication terminal comprising a retransmission device according to Claim 10.

12. Recording medium readable by a computer on which is recorded a computer program comprising instructions for the execution of the steps of the notification method according to any one of Claims 1 to 4 when the computer program is executed by a processor of an application server or instructions for the execution of the steps of the retransmission method according to any one of Claims 7 to 9 when the computer program is executed by a processor of a terminal.
